# EUROPÄISCHE PATENTSCHRIFT

(11) **EP 2 759 425 B1**
(45) Veröffentlichungstag und Bekanntmachung des Hinweises auf die Patenterteilung: **31.10.2018**
(21) Anmeldenummer: 13199267.9
(22) Anmeldetag: 23.12.2013
(51) Int. Cl.: B60J 1/00, A61G 21/00, B60J 1/10, B60J 5/04, B60J 5/06, B60Q 1/26

(54) **Bestattungsfahrzeug mit Dekorfenster**
Hearse with decorative window
Corbillard avec fenêtre décorative

(30) Priorität: 29.01.2013 DE 202013100416 U; 12.09.2013 DE 202013104165 U
(43) Veröffentlichungstag der Anmeldung: 30.07.2014
(73) Patentinhaber: Schmidt, Udo, 48734 Reken (DE)
(72) Erfinder: Schmidt, Udo, 48734 Reken (DE)
(74) Vertreter: Habbel, Ludwig

(56) Entgegenhaltungen:
- EP-A1- 2 202 108
- US-A- 2 269 739

## Beschreibung

Die Erfindung betrifft ein Bestattungsfahrzeug nach dem Oberbegriff des Anspruchs 1.
Aus der Praxis hat es sich aus wirtschaftlichen Gründen durchgesetzt, Bestattungsfahrzeuge nicht als von Grund auf eigenständige Fahrzeuge zu konstruieren, sondern sie vielmehr auf Grundlage von Großserienfahrzeugen herzustellen. Dabei haben sich zwei unterschiedliche Varianten herausgebildet: erstens können die Bestattungsfahrzeuge auf der Grundlage eines so genannten Kombis hergestellt werden, und zweitens auf der Grundlage eines so genannten Mini-Vans.

Bei den Kombis, wie in EP 2 202 108 A1 offenbart, handelt es sich um Kombinationskraftwagen, deren vorderer Abschnitt, bis etwa einschließlich der Vordersitze, einer Limousine gleicht, und die dahinter einen Transportraum für wenigstens einen Sarg als Innenraum aufweisen, welcher eine Ladefläche umfasst sowie üblicherweise eine Heckklappe, durch welche die Ladefläche zugänglich ist. Zum Bestattungsfahrzeug werden derartige Kombis umgebaut, indem die Ladefläche verlängert wird und hinter den Vordersitzen befindliche Sitze, beispielsweise eine zweite Sitzreihe, üblicherweise entfernt wird. Alternativ dazu können derartige Kombi-ähnliche Bestattungsfahrzeuge von vornherein auf Grundlage einer Limousine hergestellt werden, indem hinter den Vordersitzen der Limousine der hintere Abschnitt des Bestattungsfahrzeugs neu erstellt und üblicherweise optisch ähnlich wie der serienmäßige Kombi derselben Fahrzeugfamilie ausgestaltet wird.

Bei den so genannten Mini-Vans, also Kleintransportern, bietet das großserienmäßige Fahrzeug üblicherweise eine ohnehin ausreichende Länge des Laderaums bzw. Transportraums, um einen oder mehrere Särge einstellen zu können. Hinter den Vordersitzen ist nach dem Umbau zum Bestattungsfahrzeug üblicherweise eine Trennwand vorgesehen, um einen gasdichten Abschluss des Transportraums gegenüber der Fahrerkabine sicherzustellen. Hinsichtlich des Umbau-Aufwands, um aus einem Serienfahrzeug ein Bestattungsfahrzeug zu erzeugen, stellen die Kleintransporter eine kostengünstige Alternative im Vergleich zu den erwähnten Bestattungsfahrzeugen auf Limousinen- oder Kombi-Basis dar. Dabei sind die großserienmäßig hergestellten Kleintransporter häufig in zwei unterschiedlichen Varianten des grundsätzlich selben Fahrzeugmodells erhältlich, nämlich erstens mit Seitenfenstern auch hinter den Vordersitzen, und zweitens ohne derartige hintere Seitenfenster. Die Version mit hinteren Seitenfenstern kann im Rahmen des vorliegenden Vorschlags als Kleinbus bezeichnet werden, während zur Unterscheidung davon die Version ohne hintere Seitenfenster im Rahmen des vorliegenden Vorschlags als Transporter bezeichnet werden kann.

Problematisch beim Umbau der großserienmäßigen Fahrzeuge zu Bestattungsfahrzeugen ist stets die Anordnung der vergleichsweise großflächigen seitlichen hinteren Fenster, die bei Bestattungsfahrzeuge häufig als Seitenfenster des Transportraums vorgesehen sind. Üblicherweise weisen die umzubauenden Fahrzeuge nämlich vertikale Säulen als tragende Struktur auf. Zur Schaffung der gewünschten großen Fensterflächen müssen derartige tragende Strukturen, beispielsweise die so genannte C-Säule, unterbrochen werden, und es bedarf einer aufwendigen Umlenkung der auftretenden Kräfte um das Fenster herum, um Vertikalkräfte von oben nach unten abzutragen und dabei um die Fensterfläche umzuleiten. Diese tragenden Strukturen sind bei einem Kleinbus ebenso vorhanden wie bei einem Transporter.
Der Erfindung liegt die Aufgabe zugrunde, ein gattungsgemäßes Bestattungsfahrzeug dahingehend zu verbessern, dass dieses besonders wirtschaftlich herstellbar ist.

Diese Aufgabe wird durch Bestattungsfahrzeug mit den Merkmalen des Anspruchs 1 gelöst. Vorteilhafte Ausgestaltungen der Erfindung sind in den Unteransprüchen beschrieben.
Die Erfindung schlägt vor, im Bereich des Transportraums eines Bestattungsfahrzeug statt eines herkömmlichen Seitenfensters, welches den Einblick in das Innere des Transportraums ermöglicht, ein so genanntes Dekorfenster vorzusehen. Als Dekorfenster ist im Rahmen des vorliegenden Vorschlages eine fensterartige Ausgestaltung außen am Fahrzeug bezeichnet, die von außen wie ein Fenster wirkt, beispielsweise wie ein herkömmliches Seitenfenster, tatsächlich jedoch keinen Blick in das Innere des Bestattungsfahrzeugs ermöglicht. Das Dekorfenster weist hierzu eine Scheibe auf, die in Art einer Glasscheibe ausgestaltet ist, also ähnlich wie eine echte Glasscheibe wirkt. Die Scheibe kann bevorzugt aus einem durchsichtigen Werkstoff bestehen, wie z. B. tatsächlich aus Glas, aus Polycarbonat, aus einem UVbeständig ausgestalteten Acrylglas, oder dergleichen. Die Scheibe kann beispielsweise klar und transparent oder eingefärbt und transparent ausgestaltet sein. Die Scheibe kann jedoch gegebenenfalls auch aus einem undurchsichtigen Werkstoff bestehen, der wie eine stark getönte Scheibe wirkt, so dass eine schwarz und undurchsichtig gefärbte Scheibe optisch von außen etwa so wirkt, wie dies beispielsweise von sehr dunklen Fenstergläsern wie dem so genannten Schwarzglas oder der "privacy Verglasung" bekannt ist. Bereits die Scheibe selbst kann folglich die Sichtblende bilden, wenn ein vorschlagsgemäßes Dekorfenster z. B. eine äußere, schwarz eingefärbte Scheibe aufweist.

Wenn eine äußere Scheibe vorgesehen ist und dahinter eine Sichtblende, kann ein optischer Eindruck erzielt werden, wie ihn auch ein herkömmliches Seitenfenster bietet. Aus unterschiedlichen Blickwinkeln und auch bei Lichteinfall aus unterschiedlichen Winkeln ergeben sich unterschiedliche Perspektiven und optische Wirkungen z. B. eines Faltenwurfs der Sichtblende, wenn diese z. B. in an sich bekannter Weise in Art einer Gardine ausgestaltet ist, so dass ein optischer Eindruck erzielt wird, wie er sich auch bei einem herkömmlichen Seitenfenster ergibt.

Wie bei einem herkömmlichen Seitenfenster kann die Sichtblende ausgetauscht werden, und bei der Erstbestellung des Bestattungsfahrzeugs kann der Kunde unter einer Vielzahl von Gestaltungsvarianten der Sichtblenden bis hin zu einer individuell für ihn angefertigten Sichtblende wählen. Die Sichtblende selbst kann genauso ausgestaltet sein wie die bislang bei den herkömmlichen, echten Seitenfenstern verwendeten Sichtblenden, wobei lediglich die Sichtblende vorzugsweise so großflächig und so blickdicht ausgestaltet ist, dass ein Blick auf die hinter der Sichtblende befindlichen Bereiche des Bestattungsfahrzeugs verhindert wird.

Der vorliegende Vorschlag geht dabei von der Überlegung aus, dass durch Gardinen und ähnliche Sichtschutzeinrichtungen häufig ohnehin kein Einblick in den Transportraum des Bestattungsfahrzeugs möglich ist oder der Einblick in den Transportraum zumindest erheblich eingeschränkt ist. Durch die Verwendung eines Dekorfensters kann in besonders wirtschaftlicher Weise die optische Anmutung eines Bestattungsfahrzeugs geschaffen werden, die einem mit echten Fenstern ausgestatteten Bestattungsfahrzeug möglichst nahe kommt, jedoch mit einem erheblichen Kostenvorteil: Hinter der von außen sichtbaren Karosseriehaut des Fahrzeugs befinden sich die erwähnten tragende Strukturen. Zur Schaffung eines echten Fensters muss nicht nur die Karosseriehaut ausgeschnitten werden, sondern es müssen auch die tragenden Strukturen durch statisch gleichwertige Strukturen ersetzt werden, so dass ein erheblicher konstruktiver Eingriff in das Fahrzeug erforderlich ist, um die gewünschte, für ein Bestattungsfahrzeug typische, große Fensterfläche schaffen zu können, die üblicherweise größer ist als die großserienmäßigen Fensterflächen eines Kleinbusses. Vorschlagsgemäß hingegen können nicht nur die tragenden Strukturen gleich bleiben, sondern es kann zudem auch die äußere Karosseriehaut verbleiben, indem nämlich das Dekorfenster lediglich von außen auf die Karosseriehaut aufgesetzt wird. Falls das Dekorfenster aufgeklebt wird, kann die äußere Karosseriehaut sogar vollständig unverletzt bleiben. Statt in der Variante eines Kleinbusses kann das großserienmäßig lieferbare Fahrzeugmodell wirtschaftlich vorteilhaft ohne Fenster, also in der Variante als Transporter, bestellt werden.

Die vorstehenden Überlegungen gelten insbesondere, und der vorschlagsgemäß erzielbare wirtschaftliche Vorteil wird besonders deutlich, wenn die Dekorfenster nicht die Konturen aufweisen wie die Fenster, die bei dem gleichen Fahrzeugmodell wahlweise durch den Großserienhersteller selbst geliefert werden können, nämlich als Kleinbus, und deren Aufpreis in vielen Fällen in der Praxis lediglich einige hundert Euro auf die fensterlose Transporter-Variante des selben Fahrzeugmodells beträgt. Eine solche Ausgestaltung des Fahrzeugs würde keinen konstruktiven Aufwand erfordern, nämlich keine Umbaumaßnahme an den Fenstern nötig machen. Bei Bestattungsfahrzeugen werden jedoch typischerweise Umbaumaßnahmen vorgenommen, bei denen größere Fensterflächen geschaffen werden als die großserienmäßig lieferbaren Fenster eines Kleinbusses. Vorschlagsgemäß können vermeintliche Fenster, die ebenso groß sind wie die klassischen, großflächigen echten Fenster eines Bestattungsfahrzeugs, mit einem wirtschaftlichen Aufwand geschaffen werden, der erheblich geringer ist als die erwähnte klassische Umbaumaßnahme, nämlich in Form der vorschlagsgemäßen Dekorfenster.

Zwischen der Dekorfensterscheibe und der Karosseriehaut kann ein Abstandshalter vorgesehen sein, z. B. ein umlaufender Rahmen, so dass die Dekor-Fensterscheibe im Abstand von der Karosseriehaut gehalten wird. Bei modernen Fahrzeugen befinden sich die Fensterscheiben häufig nahezu bündig in der äußeren Karosseriehaut. Vielfach weisen die Transporter Vertiefungen in der Karosserie dort auf, wo Fenster eingesetzt werden können, wenn z. B. beim Großserienhersteller ein gleichartiges Fahrzeug mit Fenstern bestellt wird, nämlich als Kleinbus. Durch die Verwendung eines oder mehrerer Abstandshalter wird die Scheibe des Dekorfensters vorteilhaft so weit von dieser Vertiefung entfernt angeordnet, dass sie beispielsweise bündig mit der übrigen Karosseriehaut liegen kann, so dass dementsprechend der optische Eindruck eines echten Fensters möglichst realitätsnah vermittelt wird.

Zudem wird durch den Abstandshalter der Eindruck einer räumlichen Tiefe ermöglicht, wenn die Scheibe durchsichtig ist und die Sichtblende in einem gewissen räumlichen Abstand hinter der Scheibe angeordnet wird.

Aus der Praxis ist es bekannt, dass die erwähnten Vertiefungen bei der fensterlosen Transporter-Fahrzeugvariante nicht den Konturen folgen, welche die einzelnen Fenster aufweisen, die das gleiche, jedoch mit Fenstern ausgestattete Fahrzeugmodell als Kleinbus aufweisen. Vielmehr kann sich eine Vertiefung großflächig über einen Bereich erstrecken, in dem zwei oder sogar drei einzelne Großserien-Fenster des Kleinbusses vorgesehen sind. Zwischen diesen Fenstern sind hinter dem Karosserieblech der Vertiefung die erwähnten tragenden Strukturen vorgesehen. Das vorschlagsgemäße Dekorfenster kann sich über die gesamte Fläche der Vertiefung erstrecken und damit die optische Wirkung eines einteiligen Fensters schaffen, welches deutlich größer ist als jedes einzelne Fenster des Kleinbusses, und sogar größer ist als sämtliche echten hinteren Seitenfester des Kleinbusses auf dieser Fahrzeugseite, ohne dass der mit dem Entfall der tragenden Strukturen verbundene konstruktive Aufwand erforderlich wird.

Es kann vorgesehen sein, dass die Karosseriehaut entfernt wird, um auf diese Weise das Dekorfenster einschließlich Abstandshalter möglichst tief in die Karosserie eintauchen zu lassen. So kann trotz einer vergleichsweise großen Tiefe des Dekorfensters ein möglichst bündiger Anschluss der Scheibe des Dekorfensters an die umgebende Karosseriehaut ermöglicht werden. Falls die Karosseriehaut mit einem Ausschnitt versehen wird, in den das Dekorfenster eintaucht, kann vorteilhaft hinter dem Dekorfenster die tragende Struktur der Karosserie unverändert bleiben. So wird der Aufwand erheblich minimiert, um aus einem serienmäßigen Transporter ein mit Dekorfenstern versehenes Bestattungsfahrzeug zu machen. Bei dem vorschlagsgemäßen Dekorfenster ist die Sichtblende vorgesehen, die bei einem echten Fenster den Blick ins Innere des Transportraums verhindern würde und somit auch den Blick auf eine ggf. hinter dem Dekorfenster befindliche tragende Struktur der Karosserie verhindert.

Zur möglichst wirtschaftlichen Montage eines Dekorfensters kann jedoch vorteilhaft vorgesehen sein, den Eingriff in die vorhandene Karosseriestruktur des Fahrzeugs möglichst gering zu halten, indem das Dekorfenster von außen auf die Fahrzeugkarosserie aufgesetzt wird. Dementsprechend muss nicht ein Ausschnitt in der Fahrzeugkarosserie geschaffen werden, der einen Teil des Dekorfensters aufnimmt.

Beispielsweise kann eine demontierbare Befestigung des Dekorfensters vorgesehen sein, um im Reparaturfall oder zugunsten einer optischen Änderung einen Austausch des Dekorfensters mit geringem Aufwand zu ermöglichen. So kann vorgesehen sein, das Dekorfenster an nur wenigen Stellen mit Schrauben zu befestigen, beispielsweise dort, wo hinter der Karosseriehaut ohnehin eine tragende Struktur vorgesehen ist, die eine sichere Befestigung des Dekorfensters ermöglicht. An den übrigen Stellen kann der umlaufende Rahmen des Dekorfensters beispielsweise mit der Karosseriehaut verklebt werden, wobei beispielsweise ein Klebstoff verwendet werden kann, dessen Klebkraft unter entsprechendem Temperatureinfluss so weit verringert werden kann, dass das Dekorfenster rückstandsfrei von der Karosseriehaut entfernt werden kann und lediglich die wenigen Schraubenlöcher geschlossen werden müssen, welche die Karosseriehaut durchsetzen. Alternativ zu der Verwendung eines solchen Klebstoffs kann beispielsweise die Verwendung eines Industrie-Häkchenverschlusses vorgesehen sein, welcher die grundsätzliche Tragkraft zur Befestigung des Dekorfensters auf der Fahrzeugkarosserie bereitstellt, so dass nur an wenigen Punkten zur Sicherung einige Schrauben vorzusehen sind, mit denen das Dekorfenster am Fahrzeug festgeschraubt ist.

Falls eine Demontage des Dekorfensters nicht vorgesehen ist, kann eine dauerhafte Verklebung des Dekorfensters vorgesehen sein. Dies ermöglicht eine schnelle Montage, ohne dass Bohrlöcher in die Fahrzeugkarosserie eingebracht oder Schrauben gehandhabt werden müssen. Oder es kann eine Verschweißung des Dekorfensters mit dem Karosserieblech vorgesehen sein, um eine dauerhaft feste und dichte Befestigung des Dekorfensters zu ermöglichen.

Bei Kleintransportern, deren Transportraum serienmäßig fensterlos ist, finden sich in der Karosseriehaut häufig Vertiefungen in Form von Einprägungen, welche die Kontur von Fenstern nachzeichnen. Dasselbe Modell eines Kleintransporters kann bei dem Großserienhersteller wahlweise auch mit Fenstern bestellt werden, die dann im Wesentlichen dieselbe Kontur aufweisen wie die Vertiefungen in der Karosseriehaut des fensterlosen Modells. In einer ersten Ausgestaltung der Erfindung kann vorgesehen sein, dass die Dekorfenster innerhalb der Vertiefungen angeordnet sind und den Konturen der Einprägungen folgen, so dass mittels der Dekorfenster dem Betrachter von außen im Wesentlichen derselbe optische Eindruck vermittelt wird wie bei einem Kleintransporter, bei dem serienmäßig Fenster vorgesehen sind.

In einer zweiten Ausführungsform kann vorgesehen sein, dass die Dekorfenster größer sind als die erwähnten Einprägungen. Auf diese Weise kann eine besonders großzügige Verglasung des Kleintransporters simuliert werden, wie sie ansonsten von den aufwendigen Umbauten zu Bestattungsfahrzeugen bekannt ist.

Vorteilhaft kann die Scheibe zu ihrem Rand hin eine verringerte Materialstärke aufweisen. Auf diese Weise kann ein unauffälliger Übergang der Dekorscheibe an umliegende Karosserieflächen erreicht werden, wenn das Dekorfenster eine größere Tiefe aufweist als eine Vertiefung in der Fahrzeugkarosserie, oder wenn sich das Dekorfenster über eine derartige Vertiefung hinaus erstreckt. Durch die am Rand verringerte Materialstärke kann ein ähnlicher optischer Eindruck bewirkt werden wie bei einer bündig in der Karosserie eingebauten Scheibe eines echten Fensters. Zudem werden durch die verringerte Materialstärke hinderliche Vorsprünge außen auf der Fahrzeugkarosserie reduziert oder vermieden.

Es kann vorgesehen sein, dass der umlaufende Rand des Dekorfensters am Rand der Dekor-Fensterscheibe sichtbar ist. Vorteilhaft kann jedoch vorgesehen sein, dass die Dekor-Fensterscheibe über den erwähnten Rahmen, der beispielsweise 1 bis 3 cm breit sein kann, hinausragt, so dass die Dekor-Fensterscheibe außerhalb des Rahmens möglichst dicht an die Karosseriehaut anschließt, wie dies bei einem echten Fenster ebenfalls der Fall wäre.

Zu Gunsten einer möglichst flachen Ausgestaltung des Dekorfensters kann vorgesehen sein, dass die Sichtblende direkt auf einem Abschnitt der Fahrzeugkarosserie befestigt ist, der sich hinter der Scheibe des Dekorfensters befindet.

Alternativ dazu kann vorteilhaft vorgesehen sein, dass die Sichtblende auf einem eigenen Träger befestigt ist, der Teil des Dekorfensters ist. Die Scheibe ist im Abstand vor dem Träger und insbesondere vor der Sichtblende montiert und ein Abstandshalter ist auf dem Träger vorgesehen, um einen definierten Abstand zwischen der Scheibe und dem Träger zu schaffen. Beispielsweise können mehrere einzelne Elemente als Abstandshalter vorgesehen sein, oder es kann ein einziger Abstandshalter, ähnlich wie ein umlaufender Rahmen, an der Trägerplatte vorgesehen sein. Beispielsweise kann die Scheibe mit dem und den Abstandshaltern verklebt sein. Durch die Ausgestaltung mit dem Träger für die Sichtblende ist es möglicht, das Dekorfenster vorzufertigen, so dass bei der Herstellung eines Bestattungsfahrzeugs diese vorgefertigte Baugruppe als einteilig zu handhabendes Element an dem angelieferten Fahrzeug montiert werden kann und eine besonders wirtschaftliche und schnelle Fertigstellung des Bestattungsfahrzeugs durch diese Art der Montage unterstützt wird.

Die Scheibe, die Sichtblende und ein umlaufender Rahmen des Dekorfensters können vorteilhaft als Teil eines hermetisch geschlossenen flachen Kastens ausgestaltet sein, so dass beispielsweise die oben erwähnte vorgefertigte Baugruppe eine witterungsgeschützte Anordnung, beispielsweise einer Sichtblende aus textilem Werkstoff, sicherstellt. Dies ermöglicht die Montage am Fahrzeug selbst in besonders kurzer Zeit, da nach der mechanischen Befestigung des Dekorfensters keine weiteren Arbeiten, wie beispielsweise Abdichtungsarbeiten oder dgl., erforderlich sind. Zudem wird durch die hermetische Ausgestaltung als flacher, geschlossener Kasten das Eindringen von Feuchtigkeit vermieden, so dass beispielsweise Erscheinungen wie Kondenswasser u. dgl. hinter der Scheibe ausgeschlossen sind.

Bei einer derartigen Ausgestaltung des Dekorfensters als geschlossener Kasten kann vorteilhaft in dem Kasten ein feuchtigkeitbindendes Material angeordnet sein, so dass auch unter unterschiedlichen Witterungsbedingungen die innerhalb des Kastens vorhandene Feuchtigkeit nicht zu Kondensationserscheinungen an der Scheibe führt. Beispielsweise kann ein stark hygroskopisches Material, wie z. B. Silica-Gel verwendet werden.

Alternativ zu einer hermetisch geschlossenen Ausgestaltung des Dekorfensters als flacher Kasten kann vorgesehen sein, dass das Dekorfenster nach außen hin dicht ist, indem die Scheibe flüssigkeitsdicht an eine Umrandung anschließt, welche die Sichtblende ringsum umgibt. Zum Inneren des Bestattungsfahrzeugs hingegen kann bewusst eine luftdurchlässige Verbindung vorgesehen sein, um einen Luftaustausch zu ermöglichen und auf diese Weise zuverlässig feuchtigkeitsbeladene Luft aus dem Dekorfenster abführen zu können.

Dabei kann vorteilhaft vorgesehen sein, dass als Lufteinlass und Luftauslass zwei Öffnungen vorgesehen sein, die höhenmäßig voneinander beabstandet angeordnet sind. Dadurch, dass zwei Öffnungen vorgesehen sind, kann eine regelrechte Luftströmung durch das Dekorfenster erzielt werden, indem eine Öffnung als Lufteinlass und die andere als Luftauslass dient. Dadurch, dass die beiden Öffnungen höhenmäßig voneinander beabstandet sind, kann beispielsweise bei Sonneneinstrahlung von außen in dem sich erwärmenden Dekorfenster ein regelrechter Kamineffekt ausgenutzt werden und eine vertikale Durchströmung des Raumes zwischen der Scheibe und der Sichtblende bewirkt werden.

Wenn eine luftdurchlässige Verbindung einerseits zwischen die Sichtblende und die Scheibe des Dekorfensters führt und andererseits in das Innere des Bestattungsfahrzeugs kann vorteilhaft ein Gebläse vorgesehen sein, welches einen durch diese Verbindung strömenden Luftstrom erzeugt, so dass Luft hinter die Scheibe geführt wird und auf diese Weise eventuell entstehendes Kondensat von der Scheibe des Dekorfensters abgeführt werden kann oder insbesondere die Kondensatbildung von vornherein vermieden werden kann.

Vorteilhaft kann die Scheibe ringsum einen undurchsichtigen Randbereich aufweisen. Aus dem Bereich der großserienmäßigen Fahrzeugherstellung ist es bekannt, dass die dort bündig an die umgebenden Karosserieflächen anschließenden Fensterscheiben einen ringsum mehrere Zentimeter breiten undurchsichtigen Rand aufweisen, der beispielsweise schwarz eingefärbt ist. Diese undurchsichtigen Randbereiche dienen beispielsweise dazu, die Verklebung der Scheiben mit tragenden Karosseriestrukturen zu verdecken. In Anlehnung an diese großserienmäßig vorhandene optische Ausgestaltung der Fensterscheiben kann auch bei dem Dekorfenster eine ähnliche Ausgestaltung der Scheibe des Dekorfensters die seriennahe Optik von Fensterscheiben möglichst realitätsnah bewirken.

Vorteilhaft kann zwischen dem Dekorfenster und dem Inneren des Transportraums eine thermische Isolierschicht angeordnet sein. Dies stellt einen erheblichen Vorteil eines vorschlagsgemäßen Bestattungsfahrzeugs gegenüber Bestattungsfahrzeugen dar, die echte Seitenfenster im Transportraum aufweisen. Je nach geografischem Einsatzgebiet des Bestattungsfahrzeugs und je nach den jahreszeitlich unterschiedlichen klimatischen Verhältnissen kann aus gesundheitlichen Gründen eine Klimatisierung, insbesondere Kühlung, des Transportraums notwendig sein. Mittels der vorschlagsgemäß vorgesehenen Dekorfenster kann die thermische Belastung des Transportraums durch einstrahlendes Sonnenlicht deutlich reduziert werden. Da durch das vorschlagsgemäß vorgesehene Dekorfenster ohnehin kein Einblick in das Innere des Transportraums möglich ist, kann problemlos hinter dem Dekorfenster eines Bestattungsfahrzeugs eine thermische Isolierschicht angebracht werden, so dass eine besonders wirtschaftliche Klimatisierung des Transportraums ermöglicht wird und dessen Kühlverluste gering gehalten werden können.

Gegebenenfalls kann die Sichtblende eine lichtdurchlässige Fläche aufweisen, die zur Scheibe hin ausgerichtet ist, und hinter dieser lichtdurchlässigen Fläche der Sichtblende kann eine Beleuchtung vorgesehen sein. Beispielsweise kann die Sichtblende als lichtdurchlässige textile Gardine ausgestaltet sein, und die Beleuchtung in Form einer möglichst gleichmäßigen und möglichst vollflächigen Hinterleuchtung der Gardine vorgesehen sein. Auf diese Weise kann der optische Eindruck vermittelt werden, als befinde sich hinter der Gardine ein Raum, in den Tageslicht einfällt. Dafür geeignete, möglichst vollflächige und gleichmäßige Beleuchtungseinrichtungen sind beispielsweise mithilfe so genannter Lichtleittechnik und einzelnen Leuchten wie z. B. LED-Leuchten möglich, oder mithilfe gleichmäßig leuchtender Flächen, die als OLED-Flächenstrahler bekannt sind.

Vorteilhaft können zwei Dekorfenster einander benachbart angeordnet sein, wobei die beiden Dekorfenster eine gemeinsame Außenkontur schaffen und durch eine schmale Trennlinie voneinander getrennt sind. So kann z. B. eines dieser beiden Dekorfenster auf einem festen Karosserieteil angeordnet sein und das benachbarte zweite Dekorfenster auf einem beweglichen Karosserieteil wie z. B. einer Tür. Bei wenigstens einem dieser beiden Dekorfester ist zwischen dessen Scheibe und dessen Sichtblende ein Randsteg entlang der erwähnten Trennlinie vorgesehen, und dieser Randsteg ist zum Inneren dieses Dekorfensters hin verspiegelt. So wirken beim Blick von außen auf den Bereich der Trennlinie die beiden aneinander grenzenden Dekorfenster möglichst unterbrechungsfrei, denn der verspiegelte Randsteg lenkt den Blick auf die Sichtblende, so dass diese größer wirkt als sie tatsächlich ist und dementsprechend eine Trennfuge zwischen den beiden Dekorfenstern schmaler wirkt als sie tatsächlich ist. Vorteilhaft kann die erwähnte spiegelnde Oberfläche des Randstegs plan ausgestaltet sein, so dass sie keine Verzerrungen erzeugt und die optische Vergrößerung der Sichtblende möglichst unauffällig wirkt.

Vorteilhaft kann der Randsteg aus einem rostfreien Edelstahl bestehen. So kann der Randsteg möglichst schmal ausgestaltet sein, ohne dass es eines tragenden Stegs und eines darauf angebrachten spiegelnden Elements bedarf. Daher lässt sich eine möglichst schmale optische Trennlinie zwischen den beiden Dekorfenstern verwirklichen.

Vorteilhaft können die beiden Dekorfester entlang der Trennlinie jeweils einen Randsteg aufweisen, wobei die beiden Randstege eine Trennfuge begrenzen, welche zwischen den beiden Dekorfestern verläuft, und wobei sich diese Trennfuge in einem von 90° abweichenden Winkel schräg von der Scheibe weg erstreckt. Durch den schrägen Verlauf der Trennfuge zwischen den beiden Dekorfenstern kann die von außen sichtbare Trennlinie besonders schmal gehalten werden.

Vorteilhaft kann der Winkel dieser Schrägstellung zwischen 30° und 60° betragen, so dass der auf den Randsteg auftreffende Blick zuverlässig auf die Sichtblende des Dekorfensters gelenkt wird.

Vorteilhaft kann sich die Trennfuge zur äußeren Oberfläche der beiden Dekorfenster verjüngen, so dass eine konstruktiv erforderliche, vergleichsweise breite Fuge zwischen zwei Karosserieteilen vorgesehen sein kann wie den beiden erwähnten festen und beweglichen Karosserieteilen, während an der äußeren Oberfläche die dort sichtbare Trennlinie zwischen den beiden Dekorfenstern möglichst schmal gehalten werden kann.

Ausführungsbeispiele der Erfindung werden anhand der rein schematischen Darstellungen nachfolgend näher erläutert. Dabei zeigen die
- Fig. 1 - 4: in einem schematischen Horizontalschnitt durch eine Karosserie eines Bestattungsfahrzeugs unterschiedliche Ausgestaltungen von Dekorfenstern,
- Fig. 5: einen schematischen Horizontalschnitt zwei benachbarte Dekorfenster,
- Fig. 6: eine perspektivische, ausschnittsweise Ansicht auf eine erste Seite eines fensterlosen Kleintransporters,
- Fig. 7: eine perspektivische, ausschnittsweise Ansicht auf eine zweite Seite des Kleintransporters von Fig. 6, und
- Fig. 8: eine perspektivische, ausschnittsweise Ansicht auf einen mit einem Dekorfenster versehenen Kleintransporter.

In den Zeichnungen ist mit 1 jeweils ein Ausschnitt einer Fahrzeugkarosserie bezeichnet. Aus Übersichtlichkeitsgründen sind Blechdopplungen, Innenbleche, Säulen oder ähnliche tragende Karosseriestrukturen und dergleichen nicht dargestellt. Vielmehr ist lediglich die dem Betrachter von außen sichtbare Karosseriehaut dargestellt, und zwar lediglich in Art eines Ausschnitts, der als horizontaler Schnitt durch die Fahrzeugkarosserie 1 verläuft. Es handelt sich bei dem dargestellten Ausführungsbeispiel um die Fahrzeugkarosserie 1 eines so genannten Mini-Vans in der Ausführung als Transporter, der einen Transportraum ohne Seitenfenster aufweist.

Die Fahrzeugkarosserie 1 weist in einer ersten, außen verlaufenden Ebene eine äußere Karosseriefläche 2 auf. In einer zweiten Ebene, die gegenüber der Karosseriefläche 2 in Richtung zum Fahrzeuginneren versetzt ist, weist die Fahrzeugkarosserie 1 eine Vertiefung 3 auf, welche in die äußere Karosseriefläche 2 eingeprägt ist, so dass eine Mulde in dem äußeren Karosserieblech geschaffen ist. Die Vertiefung 3 verläuft in dem Bereich, in dem ansonsten Seitenfenster des Transportraums vorgesehen sind, wenn ein grundsätzlich gleiches gleichartiges Fahrzeugmodell nicht als Transporter, sondern als Kleinbus hergestellt wird, nämlich mit Seitenfenstern im Transportraum.

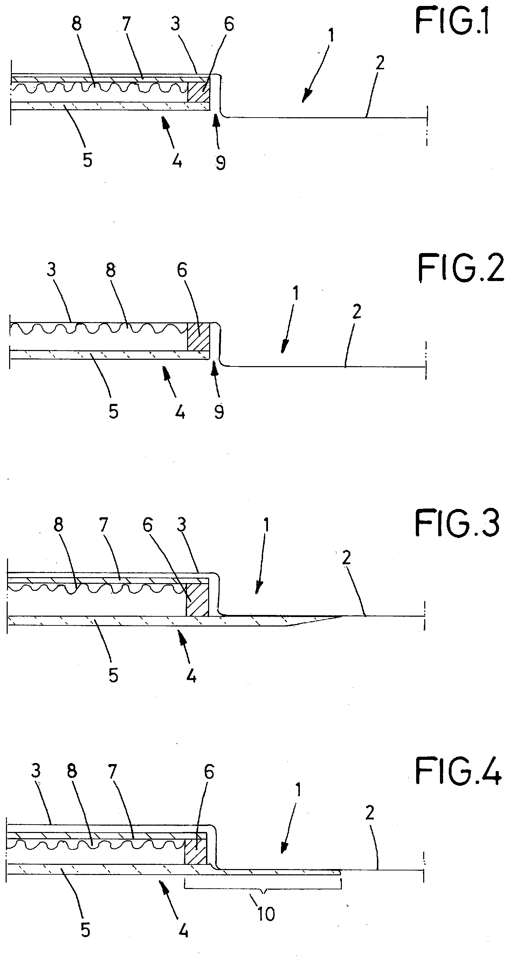

Beim Ausführungsbeispiel der Fig. 1 ist ein Dekorfenster 4 innerhalb der durch die Vertiefung 3 gebildeten Karosseriemulde angeordnet, welches umfangsmäßig den Konturen dieser Vertiefung 3 folgt. Das Dekorfenster 4 weist eine äußere Scheibe 5 auf, die aus einem durchsichtigen Werkstoff besteht, wie z. B. aus Glas, Polycarbonat oder dergleichen. Die Scheibe 5 ist auf einem Abstandshalter montiert, der bei dem dargestellten Ausführungsbeispiel als umlaufender Rahmen 6 ausgestaltet ist und auf den die Scheibe 5 geklebt ist. Rückseitig liegt der Rahmen 6 einem Träger 7 an, der bei dem dargestellten Ausführungsbeispiel als geschlossene Trägerplatte ausgestaltet ist und ebenfalls mit dem Rahmen 6 verklebt ist, so dass das Dekorfenster 4 als hermetisch geschlossener flacher Kasten ausgestaltet ist.

Der Träger 7 trägt eine Sichtblende 8, die beispielsweise aus einem textilen, in mehrere Falten gelegten Werkstoff bestehen kann. Durch die Querschnittsabmessungen des Rahmens 6 wird ein Abstand zwischen der Scheibe 5 und der Sichtblende 8 geschaffen.

Das Dekorfenster 4 ist mit der Karosserie fest verbunden, beispielsweise durch nicht dargestellte Schrauben, oder dadurch, dass es in die Vertiefung 3 eingeklebt ist. Ein Spalt 9, der sich zwischen dem Dekorfenster 4 und der umgebenden äußeren Karosseriefläche 2 ergibt, kann mittels eines dauerelastischen Fugenmaterials ausgefüllt sein, um Ansammlungen von Feuchtigkeit oder Schmutz zu vermeiden und das Dekorfenster 4 optisch in ähnlicher Weise an die äußere Karosseriefläche 2 anzuschließen, wie dies bei einem echten Fenster durch eine umlaufende Dichtung der Fall ist.

Die äußere Oberfläche der Scheibe 5 verläuft im Wesentlichen bündig mit der äußeren Karosseriefläche 2. Geringe Unterschiede zur äußeren Karosseriefläche 2 können darin bestehen, dass die Scheibe 5 entweder, wie in Fig. 1 dargestellt, etwas tiefer als die äußere Karosseriefläche 2liegend innerhalb der Vertiefung 3 angeordnet ist oder auch abweichend von dem in Fig. 1 dargestellten Ausführungsbeispiel etwas weiter außen verläuft als die äußere Karosseriefläche 2. Der optische Eindruck, den die Vertiefung 3 der Fahrzeugkarosserie 1 vermittelt, wird jedenfalls durch die Anordnung des Dekorfensters 4 in der Weise aufgehoben, dass dort, wo sich die Vertiefung 3 befindet, unter praktischen Gesichtspunkten innerhalb der Fahrzeugkarosserie 1 keine Vertiefung mehr erkennbar ist, sondern sich, umgeben von der äußeren Karosseriefläche 2, das im Wesentlichen bündige Dekorfenster 4 befindet.

Fig. 2 zeigt ein zweites Ausführungsbeispiel, welches sich von dem der Fig. 1 lediglich dadurch unterscheidet, dass die Sichtblende 8 nicht auf einem eigenen Träger angeordnet ist, wie dem Träger 7 der Fig. 1, sondern dass diese vielmehr unmittelbar auf der Fahrzeugkarosserie 1 im Bereich der Vertiefung 3 montiert ist, beispielsweise auf das Karosserieblech im Bereich der Vertiefung 3 aufgeklebt ist. Auf diese Weise wird der erforderliche Bauraum für das Dekorfenster 3 möglichst gering gehalten, so dass bei einem vorgegebenen Maß der Vertiefung 3 ein besonders tiefer räumlicher Eindruck des Dekorfensters 4 ermöglicht wird, nämlich ein möglichst großer Abstand zwischen der Scheibe 5 und der Sichtblende 8 des Dekorfensters 4. Bei einer vergleichsweise flach ausgestalteten Vertiefung 3 mit geringer Einpresstiefe in die Fahrzeugkarosserie 1 und einem dementsprechend geringen tiefen Maß gegenüber der äußeren Karosseriefläche 2 kann dennoch ein Dekorfenster 4 in der Vertiefung 3 angebracht werden, welches einen ausreichenden Abstand zwischen der Sichtblende 8 und der Scheibe 5 ermöglicht.

Die Fig. 3 und 4 zeigen zwei weitere Ausführungsbeispiele von Dekorfenstern 4. Beiden Ausführungsbeispielen ist gemeinsam, dass die Scheibe 5 sich über die Abmessungen der Vertiefung 3 hinaus erstreckt und der äußeren Karosseriefläche 2 anliegt. In beiden Fällen ist die Materialstärke der Scheibe 5 zu ihrem Rand hin verringert. Bei dem Ausführungsbeispiel der Fig. 3 weist die Scheibe 5 eine durchgehende innere Oberfläche auf, mit welcher sie dem Rahmen 6 anliegt und auch der äußeren Karosseriefläche 2. Um einen möglichst bündigen Anschluss des Dekorfensters 4 an die äußere Karosseriefläche 2 zu ermöglichen, ist die Scheibe 5 außen angeschrägt, indem ihre äußere bzw. vordere Fläche geradlinig oder gebogen zum Rand der Scheibe 5 hin verläuft und sich dementsprechend die Materialstärke der Scheibe 5 zum Rand hin verringert.

Beim Ausführungsbeispiel der Fig. 4 ist ebenfalls der äußere Rand der Scheibe 5 mit einer reduzierten Materialstärke versehen. Allerdings ist dabei die äußere bzw. vordere Seite der Scheibe 5 durchgängig bis zum Rand in einer Ebene ausgestaltet. Die Scheibe 5 liegt mit einem dünneren Randbereich der äußeren Karosseriefläche 2 an, und weist im Bereich der Vertiefung 3 ihre vollständige Materialstärke auf.

Rein beispielhaft ist in Fig. 4 an der Scheibe 5 Dekorfensters 4 ein Randbereich 10 gekennzeichnet, wobei die Scheibe 5 in diesem Randbereich 10 undurchsichtig ausgestaltet ist, beispielsweise auf ihrer Rückseite schwarz lackiert ist, so dass die dahinter befindliche äußere Karosseriefläche 2 nicht sichtbar ist. Im Bereich der Vertiefung hingegen ermöglicht die durchsichtige Ausgestaltung der Scheibe 5 einen Blick auf die Sichtblende 8 des Dekorfensters 4.

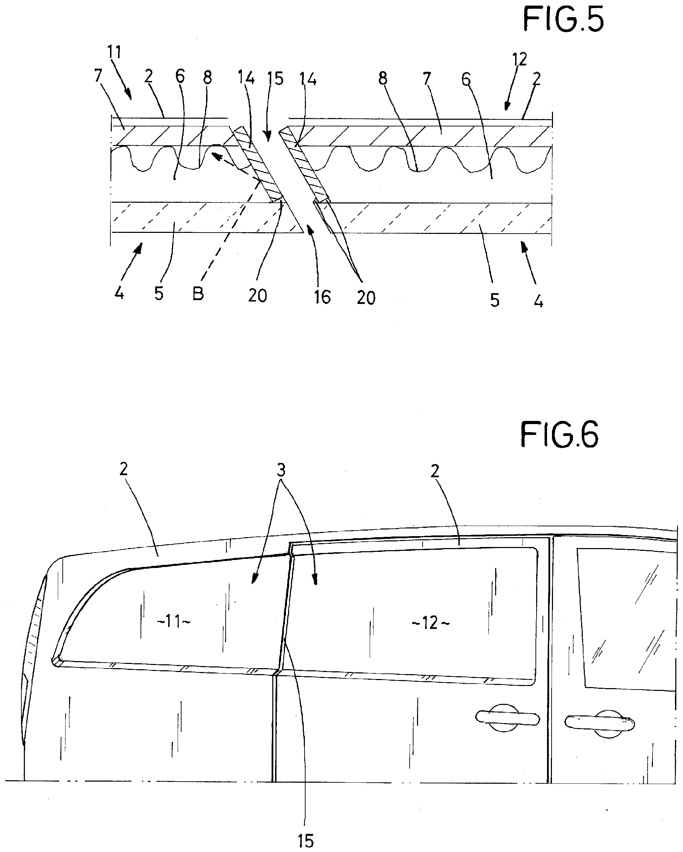

In Fig. 5 ist ähnlich wie in den Figuren 1 bis 4 ein Horizontalschnitt dargestellt, wobei hier die äußere Karosseriefläche 2 zwei unterschiedliche Abschnitte aufweist. Der links dargestellte Abschnitt der äußeren Karosseriefläche 2 ist als fest stehender Karosserieteil 11 gekennzeichnet, während der rechts dargestellte Abschnitt der äußeren Karosseriefläche 2 als beweglicher Karosserieteil 12 gekennzeichnet ist, beispielsweise als Teil einer schwenkbaren Tür oder einer Schiebetür des Bestattungsfahrzeugs. Vor beiden Karosserieteilen 11 und 12 ist jeweils ein Dekorfenster 4 angeordnet, wobei beide Dekorfenster 4 wie weiter oben beschrieben einen hinteren Träger 7 mit darauf befestigter Sichtblende 8 aufweisen sowie im Abstand davor eine transparente Scheibe 5.

Dort, wo diese beiden Dekorfenster 4 einander benachbart sind, wird ein Rand des jeweiligen Dekorfensters 4 durch einen schmalen Randsteg 14 gebildet. Beide Randstege 14 bestehen aus polierten Edelstahlprofilen, so dass bei einem Blick seitlich vom Bestattungsfahrzeug, wie dies durch den gestrichelten und mit B bezeichneten Pfeil angedeutet ist, ein derartiger Blick von der spiegelnden Oberfläche des Randstegs 14 abgelenkt wird und auf die Sichtblende 8 trifft. Die Randstege 14 sind mit der jeweiligen Scheibe 5 ihres Dekorfensters 4 verklebt, wobei die drei Raupen des verwendeten Kleb- und Dichtstoffs mit 20 gekennzeichnet sind.

Eine konstruktiv vorgesehene Trennfuge 15 zwischen den beiden Karosserieteilen 11 und 12 verjüngt sich zur äußeren Oberfläche der beiden Dekorfenster 4 hin, so dass dort als äußeres Ende der Trennfuge 15 lediglich eine schmale Trennlinie 16 sichtbar verbleibt. Bei dem dargestellten Ausführungsbeispiel ist vorgesehen, dass sich die Trennfuge 15 nicht kontinuierlich zur Trennlinie 16 hin verjüngt, was ebenfalls möglich wäre, sondern dass die beiden Scheiben 5 der beiden Dekorfenster 4 an den beiden Karosserieteilen 11 und 12 näher benachbart sind als die beiden Karosserieflächen 2 der beiden Karosserieteile 11 und 12, so dass die Trennfuge 15 zwischen den beiden Scheiben 5 schmaler ist als zwischen den beiden Randstegen 14.

Da beide Randstege 14 zum Inneren des jeweiligen Dekorfensters 4 hin die verspiegelte Oberfläche aufweisen, nämlich die polierte Oberfläche des Edelstahlprofils, ergeben sich aus einer Vielzahl von Blickrichtungen durch die Spiegelwirkung optische Eindrücke eines nahezu einteiligen Dekorfensters, indem nämlich die tatsächlich außen vorhandene Trennlinie 16 noch schmaler erscheint als sie tatsächlich ist.

In Fig. 6 ist ausschnittsweise ein Kleintransporter von seiner Beifahrerseite her dargestellt. Dieser Kleintransporter wird im Rahmen des vorliegenden Vorschlags als Transporter bezeichnet, weil er hinter den vorderen Sitzen, im Bereich seines Transportraums, keine Seitenfenster aufweist und insofern auch als fensterlos bezeichnet wird. Eine Schiebetür bildet einen beweglichen Karosserieteil 12, an welchen als fester Karosserieteil 11 der übrigen Fahrzeugkarosserie grenzt. Durch beide Karosserieteile 11 und 12 zieht sich eine Vertiefung 3, die lediglich durch die Trennfuge 15 zwischen den beiden Karosserieteilen 11 und 12 unterteilt ist, jedoch insofern als eine einzige, durchgehende Vertiefung 3 anzusehen ist, als diese Vertiefung 3 eine umlaufende Kontur schafft, welche diese Vertiefung 3 umgibt. Dadurch, dass die Vertiefung 3 auf zwei Karosserieteile 11 und 12 verteilt ist, kann im Bereich dieser Vertiefung 3 eine Ausgestaltung von zwei benachbarten Dekorfenstern 4 vorgesehen sein, die wie in Fig. 5 dargestellt eine möglichst schmale Trennlinie 16 zwischen sich aufweisen, sowie verspiegelte Randstege 14 im Bereich dieser Trennlinie 16.

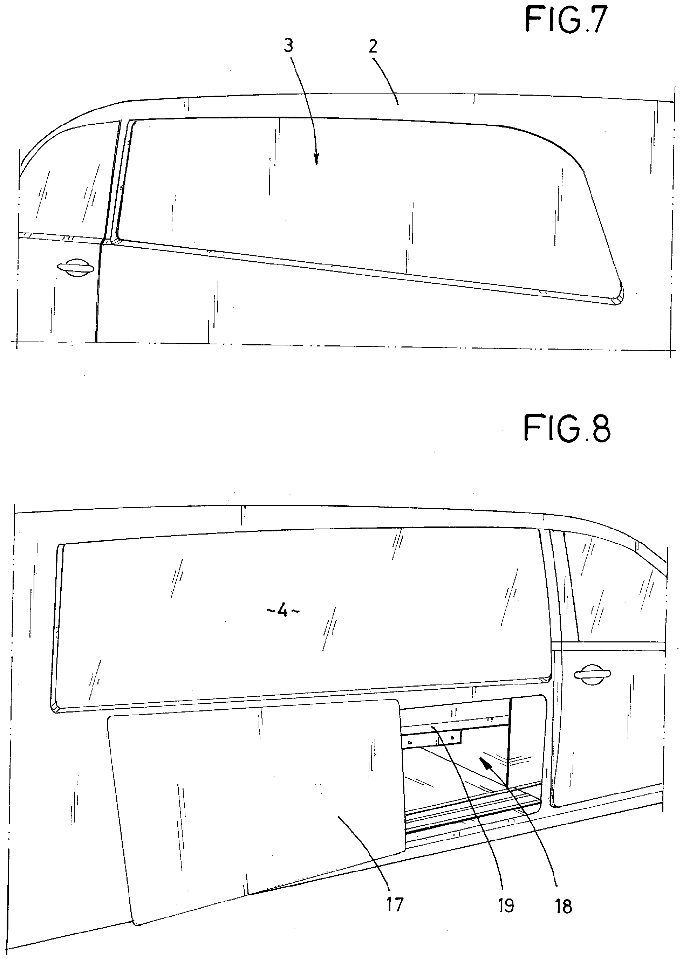

Fig. 7 zeigt die gegenüberliegende Seite des in Fig. 6 dargestellten Transporters und es ist ersichtlich, dass auf dieser Fahrerseite des Transporters eine einzige durchgehende, einstückige Ausgestaltung der äußeren Karosseriefläche 2 mitsamt einer Vertiefung 3 vorgesehen ist, wobei diese Vertiefung 3 die gleiche Außenkontur aufweist, wie die Vertiefung 3 auf der Beifahrerseite, die auf die beiden unterschiedlichen Karosserieteile 11 und 12 aufgeteilt ist.

Die Vertiefungen 3 auf beiden Seiten des Transporters, wie er in den Fig. 6 und 7 ersichtlich ist, erstrecken sich über jeweils eine größere Fläche als es einem Fenster entsprechen würde, welches bei dem gleichen Fahrzeugtyp großserienmäßig lieferbar ist, wenn der gleiche Fahrzeugtyp nicht als Transporter, sondern als Kleinbus vom Großserienhersteller ausgeliefert wird. Dadurch, dass sich die Dekorfenster 4 über die gesamte Vertiefung 3 auf der Fahrerseite des Fahrzeugs bzw. über die gesamte Vertiefung 3 im Bereich eines Karosserieteils 11 bzw. 12 auf der Beifahrerseite des Fahrzeugs erstrecken können, wird mit vorschlagsgemäßen Dekorfenstern 4 ohne aufwendigem karosserieseitigem Umbau die Verwirklichung von für Bestattungsfahrzeuge typischen Fensterflächen ermöglicht, die größer sind als die großserienmäßig erhältlichen Fenster.

Während die Fig. 6 und 7 einen Transporter im großserienmäßigen Auslieferungszustand darstellen, also noch ohne Dekorfenster, zeigt Fig. 8 einen mit einem Dekorfenster 4 versehenen Transporter des gleichen Fahrzeugmodells. Dabei ist ersichtlich, dass sich das Dekorfenster einteilig über nahezu die gesamte Länge des Transportraums erstreckt. Die ursprünglich vorhandene Schiebetür ist im Rahmen des Umbaus zum Bestattungsfahrzeug horizontal unterteilt worden, wobei lediglich der untere Teil der Schiebetür des Transporters nach wie vor beweglich ist und als Tür 17 in Fig. 8 gekennzeichnet ist. Diese Tür 17 öffnet den Zugang zu einem Stauraum 18 unterhalb eines Ladebodens 19.

Weiterhin ist aus Fig. 8 ersichtlich, dass das Dekorfenster 4 in zweifacher Hinsicht besonders großflächig ausgestaltet ist: Erstens erstreckt sich das Dekorfenster 4 über die gesamte Fläche der seitlichen Vertiefung 3, die großserienmäßig an dem Fahrzeug vorgesehen ist. Dadurch ist das Dekorfenster bereits größer als jedes einzelne der großserienmäßig bei einem Kleinbus vorgesehenen Fenster, und auch größer als die gesamte Fensterfläche, die bei einem großserienmäßigen Kleinbus im Bereich des Transportraums auf dieser Fahrzeugseite vorgesehen sind, denn zwischen den großserienmäßig vorgesehenen Fenstern sind stets noch tragende Karosseriestrukturen vorgesehen, beispielsweise eine so genannte C-Säule.

Zweitens ist das Dekorfenster 4 auch insofern besonders großflächig, als es sich über einen noch größeren Bereich als die großserienmäßig vorgesehene Vertiefung 3 erstreckt, wie insbesondere im Bereich der hinteren oberen Ecke des Dekorfensters 4 deutlich wird, wo die serienmäßige Vertiefung, wie aus Fig. 6 ersichtlich ist, stark abgerundet verläuft.

## Patentansprüche

1. Bestattungsfahrzeug,
mit einer Fahrerkabine,
und mit einem hinter der Fahrerkabine vorgesehenen Transportraum für wenigstens einen Sarg,
und mit einer Fahrzeugkarosserie (1),
wobei die Fahrzeugkarosserie (1) an den beiden Fahrzeugseiten im Bereich des Transportraums ein Seitenfenster aufweist,
**dadurch gekennzeichnet,**
**dass** das Seitenfenster als Dekorfenster (4) ausgestaltet ist, welches eine Scheibe (5) in Art einer Glasscheibe aufweist, und eine den Einblick in das Innere des Transportraums verhindernde Sichtblende (8) aufweist,
wobei hinter dem Dekorfenster (4) eine tragende Struktur und / oder die Fahrzeugkarosserie (1) angeordnet ist.

2. Bestattungsfahrzeug nach Anspruch 1,
**dadurch gekennzeichnet,**
**dass** das Dekorfenster (4) eine durchsichtige Scheibe (5) aufweist,
und **dass** hinter der Scheibe (5) ein als Sichtblende (8) ausgestaltetes separates Element angeordnet ist.

3. Bestattungsfahrzeug nach Anspruch 1 oder 2,
**dadurch gekennzeichnet,**
**dass** das Dekorfenster (4) von außen auf die Fahrzeugkarosserie (1) aufgesetzt ist.

4. Bestattungsfahrzeug nach Anspruch 3,
**dadurch gekennzeichnet,**
**dass** die Fahrzeugkarosserie (1) eine Vertiefung (3) aufweist,
und **dass** die Scheibe (5) auf einem Abstandshalter befestigt ist, der innerhalb der Vertiefung (3) angeordnet ist.

5. Bestattungsfahrzeug nach Anspruch 3,
**dadurch gekennzeichnet,**
**dass** die Fahrzeugkarosserie (1) eine Vertiefung (3) aufweist,
und **dass** die Scheibe (5) auf einem um die Vertiefung (3) verlaufenden Bereich der Fahrzeugkarosserie (1) befestigt ist.

6. Bestattungsfahrzeug nach Anspruch 5,
**dadurch gekennzeichnet,**
**dass** die Scheibe (5) zu ihrem Rand hin eine verringerte Materialstärke aufweist.

7. Bestattungsfahrzeug nach einem der vorhergehenden Ansprüche,
**dadurch gekennzeichnet,**
**dass** die Sichtblende (8) direkt auf einem hinter der Scheibe (5) befindlichen Abschnitt der Fahrzeugkarosserie (1) befestigt ist.

8. Bestattungsfahrzeug nach einem der Ansprüche 1 bis 6,
**dadurch gekennzeichnet,**
**dass** die Sichtblende (8) auf einem Träger (7) befestigt ist, und dass ein Abstandshalter auf dem Träger (7) vorgesehen ist, welcher einen definierten Abstand zwischen der Scheibe (5) und dem Träger (7) schafft.

9. Bestattungsfahrzeug nach einem der vorhergehenden Ansprüche,
**dadurch gekennzeichnet,**
**dass** die Scheibe (5), die Sichtblende (8) und ein umlaufender Rahmen (6) als Teile eines hermetisch geschlossenen flachen Kastens ausgestaltet sind.

10. Bestattungsfahrzeug nach Anspruch 9,
**dadurch gekennzeichnet,**
**dass** in dem Kasten ein feuchtigkeitsbindendes Material angeordnet ist.

11. Bestattungsfahrzeug nach einem der Ansprüche 1 bis 8,
**dadurch gekennzeichnet,**
**dass** die Sichtblende (8) ringsum von einer Umrandung umgeben ist, welche flüssigkeitsdicht an die Scheibe (5) anschließt,
und **dass** eine luftdurchlässige Verbindung in das Innere des Bestattungsfahrzeugs vorhanden ist.

12. Bestattungsfahrzeug nach Anspruch 11,
**dadurch gekennzeichnet,**
**dass** als Lufteinlass und Luftauslass zwei Öffnungen vorgesehen sind, die höhenmäßig voneinander beabstandet angeordnet sind.

13. Bestattungsfahrzeug nach Anspruch 11 oder 12,
**dadurch gekennzeichnet,**
**dass** ein Gebläse vorgesehen ist, welches einen durch die Verbindung hinter die Scheibe (5) führenden Luftstrom erzeugt.

14. Bestattungsfahrzeug nach einem der vorhergehenden Ansprüche,
**dadurch gekennzeichnet,**
**dass** die Scheibe (5) ringsum einen undurchsichtigen Randbereich (10) aufweist.

15. Bestattungsfahrzeug nach einem der vorhergehenden Ansprüche,
**dadurch gekennzeichnet,**
**dass** zwischen dem Dekorfenster (4) und dem Inneren des Transportraums eine thermische Isolierschicht angeordnet ist.

16. Bestattungsfahrzeug nach einem der vorhergehenden Ansprüche,
**dadurch gekennzeichnet,**
**dass** die Sichtblende (8) zur Scheibe (5) hin eine lichtdurchlässige Fläche aufweist,
und **dass** eine Beleuchtungseinrichtung hinter der lichtdurchlässigen Fläche vorgesehen ist.

17. Bestattungsfahrzeug nach Anspruch 2,
**dadurch gekennzeichnet,**
**dass** zwei Dekorfenster (4) einander benachbart angeordnet sind,
wobei die beiden Dekorfenster (4) eine gemeinsame Außenkontur schaffen und durch eine schmale Trennlinie (16) voneinander getrennt sind,
und wobei bei wenigstens einem der beiden Dekorfester (4) zwischen dessen Scheibe (5) und dessen Sichtblende (8) ein Randsteg (14) entlang der Trennlinie (16) vorgesehen ist, welcher zum Inneren dieses Dekorfensters (4) hin verspiegelt ist.

18. Bestattungsfahrzeug nach Anspruch 17,
**dadurch gekennzeichnet,**
**dass** die spiegelnde Oberfläche des Randstegs (14) plan ausgestaltet ist.

19. Bestattungsfahrzeug nach Anspruch 17 oder 18,
**dadurch gekennzeichnet,**
**dass** der Randsteg (14) aus einem rostfreien Edelstahl besteht.

20. Bestattungsfahrzeug nach einem der Ansprüche 17 bis 19, **dadurch gekennzeichnet,**
**dass** die beiden Dekorfester (4) entlang der Trennlinie (16) jeweils einen Randsteg (14) aufweisen,
wobei die beiden Randstege (14) eine Trennfuge (15) begrenzen, welche zwischen den beiden Dekorfestern (4) verläuft,
und wobei sich diese Trennfuge (15) in einem von 90° abweichenden Winkel schräg von der Scheibe (5) weg erstreckt.

21. Bestattungsfahrzeug nach Anspruch 20,
**dadurch gekennzeichnet,**
**dass** der Winkel zwischen 30° und 60° beträgt.

## Claims

1. Hearse having a driver's compartment and a transport compartment provided for behind the driver's compartment to accommodate at least one coffin and having a vehicle body (1), where the vehicle body (1) incorporates a side window on each side of the vehicle in the area of the transport compartment, **characterised in that** the side window is designed as a decorative window (4) that incorporates a panel (5) in the style of a glass pane and a sight screen (8) to prevent a view into the interior of the transport compartment, where a supporting structure and/or the vehicle body (1) is arranged behind the decorative window (4).

2. Hearse in accordance with claim 1, **characterised in that** the decorative window (4) incorporates a transparent panel (5) and **in that** a separate element designed as a sight screen (8) is arranged behind the panel (5).

3. Hearse in accordance with claim 1 or 2, **characterised in that** the decorative window (4) is fitted from outside onto the vehicle body (1).

4. Hearse in accordance with claim 3, **characterised in that** the vehicle body (1) incorporates a recess (3) and **in that** the panel (5) is fastened onto a spacer that is arranged inside the recess (3).

5. Hearse in accordance with claim 3, **characterised in that** the vehicle body (1) incorporates a recess (3) and **in that** the panel (5) is fastened to an area of the vehicle body (1) reaching around the recess (3).

6. Hearse in accordance with claim 5, **characterised in that** the panel (5) is slightly reduced in thickness towards its edge.

7. Hearse in accordance with any one of the foregoing claims, **characterised in that** the sight screen (8) is fastened straight onto a section of the vehicle body (1) behind the panel (5).

8. Hearse in accordance with claims 1 to 6, **characterised in that** the sight screen (8) is fastened to a support (7) and **in that** a spacer to keep the panel (5) and the support (7) a specified distance apart is provided for on the support (7).

9. Hearse in accordance with any one of the foregoing claims, **characterised in that** the panel (5), the sight screen (8) and a surrounding frame (6) are designed as parts of a hermetically sealed shallow box.

10. Hearse in accordance with claim 9, **characterised in that** a moisture-absorbent material is arranged in the box.

11. Hearse in accordance with any one of claims 1 to 8, **characterised in that** the sight screen (8) has an edge piece all around it that is joined liquid-tightly to the panel (5) and **in that** there is an air-permeable connection into the interior of the hearse.

12. Hearse in accordance with claim 11, **characterised in that** two openings that are arranged vertically apart are provided for to serve as an air inlet and air outlet.

13. Hearse in accordance with claim 11 or 12, **characterised in that** a fan to generate a flow of air through the connection to the back of the panel (5) is provided for.

14. Hearse in accordance with any one of the foregoing claims, **characterised in that** the panel (5) incorporates an opaque edge area (10) reaching all the way around.

15. Hearse in accordance with any one of the foregoing claims, **characterised in that** a thermal insulating layer is arranged between the decorative window (4) and the interior of the transport compartment.

16. Hearse in accordance with any one of the foregoing claims, **characterised in that** the sight screen (8) incorporates a translucent surface oriented towards the panel (5) and that lighting equipment is provided for behind the translucent area.

17. Hearse in accordance with claim 2, **characterised in that** two decorative windows (4) are arranged adjacent to each other, where the two decorative windows (4) form a common outer contour and are separated from each other by a thin parting line (16) and where in the case of at least one of the two decorative windows (4) an edge strip (14) that is provided with a reflective surface towards the inside of this decorative window (4) is provided for along the parting line (16) between the panel (5) and the sight screen (8) of the decorative window (4).

18. Hearse in accordance with claim 17, **characterised in that** the reflective surface of the edge strip (14) is designed flat.

19. Hearse in accordance with claim 17 or 18, **characterised in that** the edge strip (14) is made from a high-quality stainless steel.

20. Hearse in accordance with any one of claims 17 to 19, **characterised in that** each of the two decorative windows (4) incorporates along the parting line (16) an edge strip (14), where the two edge strips (14) delimit a joint (15) that extends between the two decorative windows (4) and where this joint (15) extends obliquely away from the panel (5) at an angle deviating from 90°.

21. Hearse in accordance with claim 20, **characterised in that** the angle is between 30° and 60°.

## Revendications

1. Véhicule funéraire comprenant un habitacle de conducteur et un compartiment de transport prévu derrière l'habitacle du conducteur, pour au moins un cercueil, et comprenant une carrosserie de véhicule (1), sachant que la carrosserie du véhicule (1) présente des deux côtés du véhicule, dans la zone du compartiment de transport, une fenêtre latérale, **caractérisé en ce que** la fenêtre latérale est configurée en fenêtre décorative (4) équipée d'une vitre (5) en forme de vitre en verre, et que la fenêtre présente un élément (8) faisant écran aux regards vers l'intérieur du compartiment de transport, sachant que derrière la fenêtre décorative (4) est disposée une structure porteuse et/ou la carrosserie du véhicule (1).

2. Véhicule funéraire selon la revendication 1, **caractérisé en ce que** la fenêtre décorative (4) présente une vitre (5) transparente et que derrière la vitre (5) est disposé un élément séparé (8) faisant écran aux regards.

3. Véhicule funéraire selon la revendication 1 ou 2, **caractérisé en ce que** la fenêtre décorative (4) est posée de l'extérieur sur la carrosserie du véhicule (1).

4. Véhicule funéraire selon la revendication 3, **caractérisé en ce que** la carrosserie du véhicule (1) présente un creux (3) et que la vitre (5) est fixée sur un écarteur disposé à l'intérieur du creux (3).

5. Véhicule funéraire selon la revendication 3, **caractérisé en ce que** la carrosserie du véhicule (1) présente un creux (3) et que la vitre (5) est fixée sur une zone de la carrosserie véhicule (1) périphérique du creux (3).

6. Véhicule funéraire selon la revendication 5, **caractérisé en ce que** le matériau de la vitre (5) diminue d'épaisseur en direction du bord de cette dernière.

7. Véhicule funéraire selon l'une des revendications précédentes, **caractérisé en ce que** l'élément (8) faisant écran aux regards est directement fixé sur un segment de la carrosserie véhicule (1) situé derrière la vitre (5).

8. Véhicule funéraire selon l'une des revendications 1 à 6, **caractérisé en ce que** l'élément (8) faisant écran aux regards est fixé sur un support (7) et **en ce qu'**est prévu sur le support (7) un écarteur instaurant un écart défini entre la vitre (5) et le support (7).

9. Véhicule funéraire selon l'une des revendications précédentes, **caractérisé en ce que** la vitre (5), l'élément (8) faisant écran aux regards et un cadre périphérique (6) sont configurés comme partie d'un caisson plat hermétiquement fermé.

10. Véhicule funéraire selon la revendication 9, **caractérisé en ce que** dans le caisson se trouve un matériau absorbant l'humidité.

11. Véhicule funéraire selon l'une des revendications 1 à 8, **caractérisé en ce que** l'élément (8) faisant écran aux regards est entouré d'un bord sur son pourtour, bord qui applique de manière étanche aux liquides contre la vitre (5), et **en ce qu'**est présente une jonction perméable à l'air vers l'intérieur du véhicule funéraire.

12. Véhicule funéraire selon la revendication 11, **caractérisé en ce que** sont prévus, pour l'admission d'air et l'évacuation d'air, deux orifices disposés à une hauteur différente l'un de l'autre.

13. Véhicule funéraire selon la revendication 11 ou 12, **caractérisé en ce qu'**est prévu une soufflerie générant un flux d'air passant à travers la jonction derrière la vitre (5).

14. Véhicule funéraire selon l'une des revendications précédentes, **caractérisé en ce que** la vitre (5) présente sur son pourtour une zone (10) limite opaque.

15. Véhicule funéraire selon l'une des revendications précédentes, **caractérisé en ce qu'**entre la fenêtre décorative (4) et l'intérieur du compartiment de transport est disposée une couche thermique isolante.

16. Véhicule funéraire selon l'une des revendications précédentes, **caractérisé en ce que** l'élément (8) faisant écran présente en direction de la vitre (5) une surface laissant passer la lumière, et **en ce qu'**un dispositif d'éclairage est prévu derrière la surface laissant passer la lumière.

17. Véhicule funéraire selon la revendication 2, **caractérisé en ce que** deux fenêtres décoratives (4) sont disposées voisines l'une de l'autre, sachant que les deux fenêtres décoratives (4) créent un contour extérieur conjoint et sont séparées l'une de l'autre par une ligne mince (16), et sachant que pour au moins l'une des deux fenêtres décoratives (4) est prévue, entre sa vitre (5) et son élément (8) faisant écran, une nervure en bordure (14) le long de la ligne séparatrice (16), nervure qui est réfléchissante en direction de l'intérieur de cette fenêtre décorative (4).

18. Véhicule funéraire selon la revendication 17, **caractérisé en ce que** la surface réfléchissante de la nervure en bordure (14) est configurée plane.

19. Véhicule funéraire selon la revendication 17 ou 18, **caractérisé en ce que** la nervure en bordure (14) se compose d'un acier inoxydable.

20. Véhicule funéraire selon l'une des revendications 17 à 19, **caractérisé en ce que** les deux fenêtres décoratives (4) présentent respectivement une nervure en bordure (14) le long de la ligne séparatrice (16), sachant que les deux nervures en bordure (14) limitent un joint de séparation (15) circulant entre les deux fenêtres décoratives (4) et sachant que ce joint de séparation (15) s'étend en s'éloignant en biais de la vitre (5) selon un angle différent de 90°.

21. Véhicule funéraire selon la revendication 20, **caractérisé en ce que** l'angle est compris entre 30° et 60°.
